Europäisches Patentamt

European Patent Office

Office européen des brevets

(19)

(11) Veröffentlichungsnummer: **0 156 963**
**A1**

# (12) EUROPÄISCHE PATENTANMELDUNG

(21) Anmeldenummer: 84113691.4

(22) Anmeldetag: 13.11.84

(51) Int. Cl.⁴: **A 47 J 41/02, B 65 D 39/00**

(30) Priorität: 22.03.84 DE 3410584

(43) Veröffentlichungstag der Anmeldung: 09.10.85
Patentblatt 85/41

(84) Benannte Vertragsstaaten: **AT BE CH DE FR GB IT LI LU NL SE**

(71) Anmelder: **Rotpunkt Dr. Anso Zimmermann, Industriestrasse, D-6434 Niederaula / Bad Hersfeld (DE)**

(72) Erfinder: **Zimmermann, Anso, Dr., Seilerweg 34, D-6430 Bad Hersfeld (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

(54) Deckel für ein Isoliergefäss, insbesondere eine Isolierkanne oder -flasche.

(57) Die Erfindung bezieht sich auf einen Deckel für ein Isoliergefäß, insbesondere eine Isolierkanne oder -flasche, bestehend aus einem Deckeloberteil (12, 13) und einem Deckelunterteil (14, 15) die dadurch aneinander festlegbar sind, daß sie sich im Bereich axialer Abschnitte (17, 19, 27) einander haltend übergreifen und verfolgt den Zweck, eine Lockerung der Halterung zwischen den Deckelteilen zu vermeiden bzw. den Zusammenhalt der Deckelteile auch dann zu gewährleisten, wenn der Deckel einer erhöhten Temperatur ausgesetzt ist.

EP 0 156 963 A1

0156963

Deckel für ein Isoliergefäß, insbesondere eine Isolierkanne oder -flasche

Die Erfindung bezeiht sich auf einen Deckel nach dem Oberbegriff nach Anspruch 1.

Deckel dieser Bauart sind in der Praxis eingeführt und deshalb bekannt. Sie sind hohl ausgestaltet und bestehen deshalb zwecks Materialersparnis aus Deckelober- und Deckelunterteilen. Die Teile eines Deckels sind jeweils durch geeignete Maßnahmen, beispielsweise durch eine zwischen den sich übergreifenden Flächen wirksame Rastverbindung aneinander gehalten. Im Hinblick auf eine gute Halterung sollen das Deckeloberteil und das Deckelunterteil klapperfrei aneinander gehalten sein.

Eine solche Halterung ist bei der bekannten Bauart jedoch nicht im gesamten Temperaturbereich möglich, dem ein vorliegender Deckel ausgesetzt ist. Da das Isoliergefäß sowohl zum Warmhalten als auch zum Kalthalten benutzt werden kann, ist schon hierdurch der Deckel erheblichen Temperaturschwankungen ausgesetzt. Darüberhinaus wird der Deckel einschließlich seinem Oberteil auch heißem Wasser zwecks seiner Reinigung ausgesetzt. Bei solchen Temperaturschwankungen erfolgt bei der bekannten Bauart eine Lockerung der Halterung, weil aufgrund der Durchmesserdiffenzen im Bereich der einander übergreifenden Abschnitte der im Durchmesser größere axiale Abschnitt größere Längenveränderungen erfährt als der übergriffene Abschnitt des jeweiligen Deckelteils. Dieser nachteilige Effekt kann noch dadurch erhöht werden, daß aufgrund unterschiedlicher Materialien für das Deckeloberteil und das Deckelunterteil die Differenz zwischen den Längenveränderungen noch vergrößert wird.

Der Erfindung liegt die Aufgabe zugrunde, einen Deckel der eingangs bezeichnete Bauart so auszugestalten, daß der Zusammenhalt des Deckeloberteils und des Deckelunterteils durch schwankende Temperaturen nicht beeinträchtigt wird.

Diese Aufgabe wird durch die Merkmale des Anspruchs 1 gelöst.

Bei der erfindungsgemäßen Ausgestaltung ist der Zusammenhalt bzw. eine Lockerung zwischen den einander übergreifenden Deckelteilen deshalb nicht möglich, weil die am übergreifenden Deckelteil angeordneten Vorsprünge den übergriffenen Abschnitt des anderen Deckelteils innenseitig stützen. D.h., wenn bei einer Temperaturanhebung der übergreifende Deckelteil sich aufgrund seines größeren Durchmessers im Vergleich zum übergriffenen Deckelteil mehr ausdehnt als dieser, erfolgt keine Lockerung der Halterung , weil die Vorsprünge des übergreifenden Deckelteils an dessen Längenausdehnung teilnehmen und den übergriffenen Abschnitt in Anlage mit dem übergreifenden Abschnitt halten.

Die Ausgestaltungen nach den Ansprüchen 2 bis 4 beziehen sich auf einfache Ausführungsformen für den übergriffenen Abschnitt des einen Deckelteils und die Vorsprünge des anderen Deckelteils. Hierbei ist zu berücksichtigen, daß ein bevorzugter Werkstoff für einen vorliegenden Deckel Kunststoff ist und die Bauformen im Hinblick auf die Herstellung durch Spritzgießen oder Spritzpressen möglichst günstig zu gestalten sind.

Die Ausgestaltung nach Anspruch 4 weist deshalb einen weiteren Vorteil auf, weil der ringförmige Vorsprung aufgrund seiner ringförmigen Anlage gleichzeitig abdichtend wirkt.

Durch die Ausbildung nach Anspruch 5 wird die Stabilität der Halterung bedeutend vergrößert, weil die Ansätze am übergriffenen Deckelteil die Vorsprünge am übergreifenden Deckelteil innenseitig stützen und daß deshalb der Zusammenhalt bzw. eine Lockerung der Halterung auch dann verhindert ist, wenn die Längenausdehnungen im Bereich der Halterung zu erheblichen Spannungen führen. Die verbesserte Abstützung ist auf das kammartige Ineinandergreifen zurückzuführen.

Im Hinblick auf die Ausgestaltungen nach den Ansprüchen 6 und 7 wird auf die Ausführungen zu den Ansprüchen 2 bis 4 verwiesen.

Eine K l e mmwirkung gemäß Anspruch 8 erhöht nicht nur die Stabilität der Halterung, sondern sie führt auch dann zu einer Verbesserung der Dichtheit, wenn die Vorsprünge und die Ansätze durch einen ringförmigen Vorsprung bzw. einen ringförmigen Ansatz gebildet sind.

Nachfolgend werden zwei Ausführungsbeispiele der Erfindung anhand einer vereinfachten Zeichnung beschrieben.

Es zeigen

Fig. 1     eine Isolierkanne im lotrechten Teilschnitt, wobei zwei hälftig dargestellte Deckel in der ersten und zweiten Ausführungsform dargestellt sind;

Fig. 2     eine Draufsicht auf das Deckelunterteil des ersten Ausführungsbeispiels;

Fig. 3     eine Unteransicht des Deckeloberteils des ersten Ausführungsbeispiels;

Fig. 4     eine Draufsicht auf das Deckelunterteil des zweiten Ausführungsbeispiels;

Fig. 5   eine Unteransicht des Deckeloberteils des zweiten
Ausführungsbeispiels,

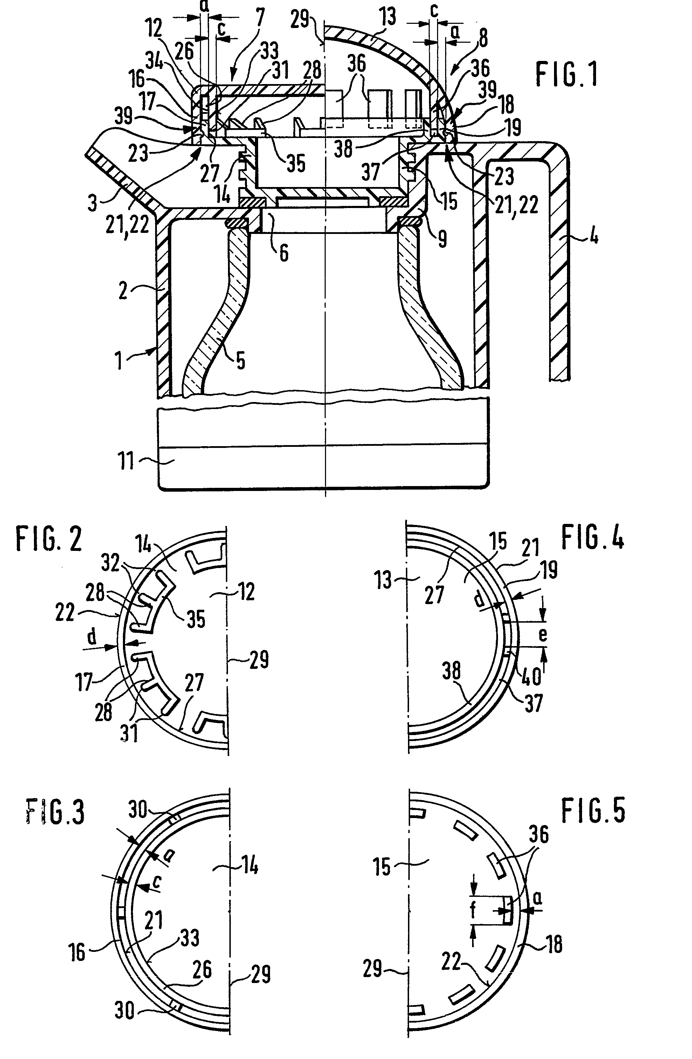

Die in Fig. 1   allgemein mit 1 bezeichnete Isolierkanne
umfaßt ein Gehäuse 2 mit einstückig angeformtem Gießer
3 und Griff 4, einem im Gehäuse  angeordneten Isoliereinsatz 5 und einen eine Füllöffnung 6  verschließbaren Deckel
7 bzw. 8 in Form eines Schraubstopfens mit Gewinde.
Der Isoliereinsatz 5 ist zwischen einer Schulter 9 und
einem schraubbaren Bodenteil 11 gehalten.

Die Deckel 7,8 beider Ausführungsformen bestehen aus einem
Deckeloberteil 12,13 und einem Deckelunterteil 14,15 ,
von denen jeweils das Deckeloberteil 12,13   das Deckelunterteil 14,15 im Bereich von axialen Längsabschnitten
16,17,18,19 übergreift, die hohlzylindrisch (runde
Deckel 7,8) ausgebildet sind und sich aufeinanderzu erstrecken. Die sich einander übergreifenden Flächen der
axialen Längsabschntite 16 bis 19 sind mit 21,22 bezeichnet. Zwischen diesen Flächen 21,22 ist eine Verrastung 23 in Form eines Ringwulstes am Längsabschnitt 16,
18 vorgesehen, der in eine Ringnut auf dem Längsabschnitt
17,19 einschnappt. Die Flächen 21,22 sind geringfügig
konisch ausgebildet, wodurch das Zusammenstecken des
Deckeloberteils 12,13 und des Deckelunterteils 14,15 erleichtert wird.

Beim ersten Ausführungsbeispiel erstreckt sich vom Deckeloberteil 12 innerhalb seines axialen Längsabschnitts 16
ein ringförmiger Vorsprung 26, der den axialen Längsabschnitt 17 des Deckelunterteils 14 hintergreift und an
dessen Innenfläche 27 anliegt. Der Abstand a zwischen dem
Längsabschnitt 16 und dem ringförmigen Vorsprung 26
entspricht der Dicke des Längsabschnitts 17.

Vom übergriffenen Deckelunterteil 14 springen in Richtung auf das übergreifende Deckeloberteil 12 mehrere auf dem Umfang verteilte Ansätze 28 in Form von Stegen vor, die sich radial und parallel zur Achse 29 des Deckels 7,8 erstrecken. Zwischen den Außenflächen 31 der Ansätze 28 und der Innenfläche 27 des axialen Längsabschnitts 17 besteht ein Abstand, der der Dicke c des ringförmigen Vorsprungs 26 entspricht. Dieser ringförmige Vorsprung 26 faßt deshalb schließend in die zwischen den Außenflächen 31 der Ansätze 28 und der Innenfläche 27 des axialen Längsabschnitts 17 bestehenden Spaltes 32 ein. Dabei liegt die Innenfläche 33 des ringförmigen Vorsprungs 26 an den Außenflächen 31 der Ansätze 28 und die Außenseite 34 des ringförmigen Vorsprungs 26 an der Innenseite 27 des axialen Längsabschnitts 17 an.

Die Ansätze 28 sind strahlenförmig auf dem Umfang verteilt und gehen einstückig von einer axial vorspringenden Rippe 35 aus und bilden eine Versteifung für das Deckelunterteil 14. Mit 3o sind sich zwischen dem Längsabschnitt 16 und dem Vorsprung 26 erstreckende Stege bezeichnet.

Das zweite Ausführungsbeispiel unterscheidet sich vom vorbeschriebenen ersten im wesentlichen nur durch drei Merkmale. Zunächst handelt es sich nicht um einen Flachdeckel, sondern um einen auf seiner Oberseite kugelförmig gewölbten Deckel 8. Anstelle des ringförmigen Vorsprungs 26 gehen hier vom Deckeloberteil 13 segmentförmig angeordnete Vorsprünge 36 aus, die in einer mit dem ersten Ausführungsbeispiel vergleichbaren Weise den axialen Längsabschnitt 19 des Deckelunterteils 15 untergreifen und dabei an seiner Innenfläche 27 anliegen. Die Vorsprünge 36 tauchen ebenfalls in einen Spalt ein, der bei diesem Ausführungsbeispiel jedoch Ringform hat und mit 37 bezeichnet ist. Die Ringform ist deshalb gegeben, weil beim zweiten Ausführungsbeispiel der Spalt 37 innenseitig durch einen ringförmigen Ansatz 38 begrenzt ist. Die Breite des Spaltes 37 entspricht der Dicke c der Vorsprünge 36.
Diese fassen deshalb schließend in den Spalt 37 ein.

Dabei ist bei beiden Ausführungsformen die Anordnung so
getroffen, daß der ringförmige Vorsprung 26 und die Vorsprünge 36 mit einer Klemmwirkung in die Spalten 32,37
einfassen. Durch diese Klemmwirkung wird die allgemein
mit 39 bezeichnete Halterung zwischen den Deckeloberteilen 12,13 und den Deckelunterteilen 14,15 unterstützt.
Beim zweiten Ausführungsbeispiel ergibt sich hierdurch
gleichzeitig eine Ringdichtung, die unabhängig von der
durch die Flächen 21,22 gebildeten Dichtung besteht.

Mit 4o sind sich radial zwischen dem Längsabschnitt 19
und dem ringförmigen Ansatz 38 erstreckende Stege bezeichnet, die einen Abstand e zwischen sich aufweisen, der der
Breite f der Vorsprünge 36 entspricht. Somit ist das
Deckeloberteil 13 am Deckelunterteil 15 in Umfangsrichtung
festgelegt.

Bei einem Temperaturanstieg wird der axiale Längsabschnitt
16 bzw. 19 des Deckeloberteils 12 bzw. 13 sich aufgrund
seines größeren mittleren Durchmessers mehr vergrößern
als der axiale Längsabschnitt 17 bzw. 19 des Deckelunterteils 14 bzw. 15. Diese Ausdehnung führt zu einem Klappern
der Halterung 39, wenn das Maß der Ausdehnung größer ist
als eine gewisse Vorspannung, mit der das Deckeloberteil
12 bzw. 13 das Deckelunterteil 14 bzw. 15 übergreift.
Bei der erfindungsgemäßen Ausgestaltung erfolgt kein
Klappern bei einem Temperaturanstieg und es ist der Zusammenhalt der Halterung 39 auch nicht beeinträchtigt,
weil der ringförmige Vorsprung 26 bzw. die Vorsprünge
36 den axialen Längsabschnitt 17 bzw. 19 innenseitig
radial auswärts beaufschlagen und die Flächen 21,22 in
Anlage halten. Es ist erkennbar, daß für eine Funktion
der erfindungsgemäßen Ausgestaltung die Ansätze 28 bzw.

der ringförmige Ansatz 38 nicht vorhanden sein müssen. Diese Teile fördern die Abstützung und die Klemmwirkung des kammartigen Eingriffs.

ANSPRÜCHE

1. Deckel für ein Isoliergefäß, insbesondere für eine
Isolierkanne oder -flasche, bestehend aus einem Deckeloberteil und einem Deckelunterteil, die dadurch aneinander festlegbar sind, daß sie sich im Bereich axialer
Abschnitte einander haltend übergreifen,
dadurch gekennzeichnet,
daß am übergreifenden Deckelteil (12,13) zum übergriffenen Deckelteil (14,15) hin weisende Vorsprünge (26,
36) angeordnet sind, die etwa axial verlaufende Innenflächen (27) des übergriffenen Abschnitts (17,19)
hintergreifen.

2. Isoliergefäß nach Anspruch 1,
dadurch gekennzeichnet,
daß der übergriffene Abschnitt (17,19) hohlzylindrische
Form hat und daß seine zylindrische Innenwandung (27)
die Innenflächen bildet.

3. Isoliergefäß nach Anspruch 1 oder 2,
dadurch gekennzeichnet,
daß die Vorsprünge (36) segmentförmig auf dem Umfang ver
teilt sind.

4. Isoliergefäß nach Anspruch 1 oder 2,
dadurch gekennzeichnet,
daß die Vorsprünge durch einen ringförmigen Vorsprung (26) gebildet sind.

5. Isoliergefäß nach einem der Ansprüche 1 bis 4,
dadurch gekennzeichnet,
daß die Vorsprünge (36) oder der ringförmige Vorsprung (26) innenseitig von etwa axial verlaufenden
Flächen (31) des übergriffenen Deckelteil (17,19)
hintergriffen sind.

6. Isoliergefäß nach Anspruch 5,
dadurch gekennzeichnet,
daß die axialen Flächen durch die Außenfläche (31)
von einem zylindrischen Ansatz (38) oder mehreren
segmentförmig auf dem Umfang verteilten Ansätzen
(28) gebildet sind.

7. Isoliergefäß nach Anspruch 6,
dadurch gekennzeichnet,
daß die Ansätze (28) durch radial und längs der
Deckelachse (29) verlaufende Stege gebildet sind.

8. Isoliergefäß nach einem der Ansprüche 1 bis 7,
dadurch gekennzeichnet,
daß die Vorsprünge (36) oder der ringförmige Vorsprung (26) klemmend zwischen die Innenfläche (27)
des übergriffenen Abschnitts (17,19) und die Außenflächen (31) der Ansätze (28) oder des ringförmigen
Ansatzes (38) fassen.

FIG.1

FIG. 2

FIG.3

FIG. 4

FIG.5

Europäisches
Patentamt

EUROPÄISCHER RECHERCHENBERICHT

0156963

Nummer der Anmeldung

EP 84 11 3691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 934 231 (BRAMMING)<br>* Spalte 3, Zeilen 45-53; Figuren 2,4 *<br><br>----- | 1,2,4 | A 47 J 41/02<br>B 65 D 39/00 |

RECHERCHIERTE SACHGEBIETE (Int. Cl.4)

A 47 J
B 65 D

Der vorliegende Recherchenbericht wurde für alle Patentansprüche erstellt.

| Recherchenort<br>DEN HAAG | Abschlußdatum der Recherche<br>21-06-1985 | Prüfer<br>SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82